# EUROPÄISCHE PATENTANMELDUNG

(11) **EP 3 318 839 A1**
(43) Veröffentlichungstag der Anmeldung: **09.05.2018**
(21) Anmeldenummer: 17189501.4
(22) Anmeldetag: 05.09.2017
(51) Int. Cl.: G01B 11/24, B61K 9/08, G06T 7/557, B61K 9/12

(54) **SYSTEM UND VERFAHREN ZUM ERFASSEN VON EIGENSCHAFTEN MINDESTENS EINES RADES EINES SCHIENENFAHRZEUGS**

(30) Priorität: 07.09.2016 DE 102016116782
(71) Anmelder: AuE Kassel GmbH, 34123 Kassel (DE)
(72) Erfinder: Nowaczyk, Barbara, 34260 Kaufungen (DE)
(74) Vertreter: Patent- und Rechtsanwälte Dr. Solf & Zapf

(57) **Zusammenfassung**

Die Erfindung betrifft ein System (1) zur Erfassung von Eigenschaften mindestens eines Rades (2) eines Schienenfahrzeugs, wobei das System (1) an mindestens einer ersten Schiene (4a) anordenbar ist, wobei das System (1) mindestens eine erste Erfassungseinrichtung (9) aufweist, wobei die erste Erfassungseinrichtung (9) zur Erfassung mindestens eines ersten Bereichs (10) eines auf der ersten Schiene (4a) passierenden Rades (2) eines Schienenfahrzeuges eingerichtet ist.

Ein System (1) und ein Verfahren zur Ermittlung von Eigenschaften eines Rades (2) und/oder eines Radsatzes eines Schienenfahrzeuges, bei dem die Genauigkeit der ermittelten Eigenschaften des Rades (2) und/oder des Radsatzes im Vergleich zu aus dem Stand der Technik bekannten Systemen (1) und/oder Verfahren gesteigert ist, wird realisiert, indem dass die erste Erfassungeinrichtung (9) eine plenoptische Kamera ist.

## Beschreibung

Die Erfindung betrifft ein System und ein Verfahren zum Erfassen von Eigenschaften eines Rades und/oder eines Radsatzes eines Schienenfahrzeuges, insbesondere eines geometrischen Ist-Zustandes des Rades und/oder Radsatzes.

Die Räder eines Schienenfahrzeuges unterliegen durch die Beanspruchung im Betriebseinsatz einem Verschleiß bzw. einer Schädigung und Abnutzung. Das Verschleißverhalten eines Rades eines Schienenfahrzeuges wird dabei beispielsweise durch die Laufleistung, insbesondere in Abhängigkeit von der Streckencharakteristik, die Aufstandskraft pro Rad sowie die Antriebs- und Bremskräfte beeinflusst. Neben Dauerbelastungen, die beispielsweise zu einer plastischen Verformung im Bereich der Lauffläche führen, sind auch Einzelereignisse wie starke Bremsungen für den Verschleiß verantwortlich. Während bei Eisenbahnen insbesondere die Lauffläche beansprucht wird, ist beispielsweise bei Straßenbahnen aufgrund der engen Kurvenradien im Fahrbetrieb insbesondere der Radkranz von Verschleiß betroffen.

Die Abnutzung oder Verformung der Räder eines Schienenfahrzeuges ist innerhalb vorbestimmter Grenzbereiche akzeptabel und muss daher regelmäßig kontrolliert werden. Die Planung der Instandhaltung von Rädern und Radsätzen von Schienenfahrzeugen setzt daher eine möglichst genaue Kenntnis des tatsächlichen Verschleißverhaltens voraus, um nicht erforderliche Wartungen oder Reparaturen zu vermeiden, gleichzeitig aber Schädigungen und Verschleiß frühzeitig zu erkennen. Dazu wird jedes einzelne Rad einer regelmäßigen Überprüfung unterzogen, deren Intervalle oftmals anhand der Laufleistung festgelegt sind, ohne aber die tatsächliche Beanspruchung zu berücksichtigen.

Um den Aufwand für eine regelmäßige Erfassung der aktuellen Eigenschaften eines Rades zu reduzieren, haben sich in der Praxis automatische Systeme als vorteilhaft erwiesen, die die Oberfläche eines Rades beispielsweise optisch erfassen. Im Stand der Technik sind dazu eine Vielzahl von unterschiedlichen Systemen mit variierender Präzision bekannt.

DE 10 2012 207 427 A1 offenbart beispielsweise ein Verfahren zur optischabtastenden Prüfung einer Lauffläche eines Rades eines Zuges. Zur Erfassung ist die eine Kamera derart angeordnet, dass die auf einer Schiene abrollende Lauffläche des Rades über ihren gesamten Umfang durch Anpassung der Schärfentiefe der Kamera optisch erfasst und diese anschließend analysiert wird.

EP 1 992 167 B1 offenbart ein Verfahren zur Messung von Eigenschaften von Rädern eines Schienenfahrzeuges, bei dem im Gleis eine Referenzmarkierung angeordnet ist, die zusätzlich zu dem zu erfassenden Rad von einer Bilderfassungsvorrichtung des Systems erkannt wird.

Die aus dem Stand der Technik bekannten Systeme und Verfahren weisen allerdings den Nachteil auf, dass die Erfassung der Oberfläche eines Rades eines Schienenfahrzeuges nicht mit ausreichender Genauigkeit erfolgt.

Der Erfindung liegt deshalb die Aufgabe zu Grunde, ein System und ein Verfahren zur Ermittlung von Eigenschaften eines Rades und/oder eines Radsatzes eines Schienenfahrzeuges anzugeben, bei dem die Genauigkeit der ermittelten Eigenschaften des Rades und/oder des Radsatzes im Vergleich zu aus dem Stand der Technik bekannten Systemen und/oder Verfahren gesteigert ist.

Die eingangs genannte Aufgabe ist bei einem gattungsgemäßen System gelöst mit den Merkmalen des Kennzeichnungsteils des Patentanspruchs 1, nämlich dadurch, dass die erste Erfassungseinrichtung eine plenoptische Kamera ist. Plenoptische Kameras werden auch als Lichtfeldkameras bezeichnet und zeichnen sich dadurch aus, dass zusätzlich zu der üblicherweise erfassten Farbe und Intensität der Strahlung auch die Richtung einfallender Strahlung erfasst wird. Mit der ersten Erfassungseinrichtung ist die Richtung einfallender Strahlung erfassbar.

Durch die Erfassung der Richtung der einfallenden Strahlung, insbesondere der Richtung des einfallenden Lichts, enthalten die erfassten Bilddaten auch eine Information über die Bildtiefe, so dass die Möglichkeit der nachträglichen Fokussierung besteht, nämlich die Schärfenebene nachträglich im erfassten Bereich justierbar ist. Dadurch lässt sich auf Basis der Bilddaten der plenoptischen Kamera ein dreidimensionales Modell eines erfassten Gegenstandes berechnen.

Auf Basis der Bilddaten der ersten Erfassungseinrichtung, die als plenoptische Kamera ausgebildet ist, kann von dem ersten Bereich, in dem eine Erfassung mit der ersten Erfassungseinrichtung erfolgt, ein dreidimensionales Modell berechnet werden. Auf Basis der als Bilddaten erfassten geometrischen Eigenschaften können tatsächliche Maße des Rades bestimmt und damit Rückschlüsse auf den Verschleiß des Rades getroffen werden.

System ist an mindestens einer ersten Schiene angeordnet. Das System umfasst insbesondere mindestens einen ersten Systemteil, der an mindestens einer Schiene eines Gleises angeordnet ist. Vorzugsweise ist ein zweiter Systemteil vorgesehen, der an einer zweiten Schiene des Gleises angeordnet ist. Das Gleis umfasst zwei im Wesentlichen parallel verlaufende Schienen, wobei ein passierendes Schienenfahrzeug mit den beiden Rädern eines Radsatzes auf jeweils einer der Schienen geführt wird. Der erste Systemteil ist beispielsweise an einer Montageplatte befestigt, die unter der Schiene hindurchtritt und mit zwei Spannplatten am Schienenfuß verschraubt ist. Auf jeder Seite der Schiene ist jeweils eine Spannplatte angeordnet, die insbesondere mit Gewinden innerhalb der Montageplatte zusammenwirkt.

Dabei ist es für die Funktionsweise des Systems nicht von Bedeutung, ob sich das Rad in Ruhe befindet oder bewegt wird; das System funktioniert in beiden Fällen. Das System ist insbesondere dazu ausgebildet die Eigenschaften eines passierenden Rades in einem Geschwindigkeitsbereich zwischen 0,5 km/h und 100 km/h, insbesondere zwischen 5 km/h und 15 km/h, zu erfassen.

Das System umfasst vorzugsweise eine Auswerteeinheit, die beispielsweise als Computersystem ausgebildet ist. Die Auswerteeinheit ist beispielweise mittels Lichtwellenleitern mit der Messeinheit verbunden. Die Auswerteeinheit umfasst insbesondere eine Datenbank in der die erfassten Daten abspeicher- und abrufbar sind. Die Auswerteeinheit ist so eingerichtet, dass sie mindestens den ersten Bilddatensatz der ersten Erfassungseinrichtung des ersten Bereichs auswertet. Der erste Bilddatensatz wird also beispielsweise unter Heranziehung der geometrischen Anordnung der Erfassungseinrichtungen relativ zur Schiene und/oder zum Rad ausgewertet, um ein sehr genaues Modell der aktuellen Oberfläche des Rades, insbesondere der Lauffläche, zu erhalten. Aus diesen Daten ermittelt die Auswerteeinheit beispielsweise Materialverschiebungen im Bereich der Lauffläche und weiteren Verschleißerscheinungen des Rades. Vorzugsweise werden die aktuell ermittelten Daten dazu beispielsweise mit bekannten Daten aus der Datenbank verglichen, beispielsweise solchen, die zu einem anderen - früheren - Zeitpunkt von dem gleichen Rad erfasst worden sind.

Es ist zudem ferner vorzugsweise vorgesehen, dass das System mindestens eine Ausleseeinheit für einen Rad-Transponder, z.B. für einen RFID-Chip oder einen Barcode, und/oder eine Radlasterfassungseinheit zur Messung der Radlast des Rades und/oder eine Schwingungsüberwachungseinheit zur Erfassung von Schwingungen des Rades umfasst.

Die Genauigkeit der von der ersten Erfassungseinrichtung erfassten Bilddaten kann gemäß einer ersten Ausgestaltung dadurch gesteigert werden, dass die plenoptische Kamera mindestens eine Hauptlinse und mindestens eine strukturierte Filmschicht oder ein Linsenraster zwischen der Hauptlinse und mindestens einem Bildsensor aufweist. Die strukturierte Filmschicht umfasst beispielsweise ein feines Raster aus Linien, das Rückschlüsse auf die Richtung der einfallenden Strahlung zulässt. Das Linsengitter führt dazu, dass jeder Bildpunkt erneut gebrochen und derart auf die Sensorfläche des Bildsensors geleitet wird, dass die Richtung der einfallenden Strahlung bestimmbar ist.

Alternativ dazu ist gemäß einer weiteren Ausgestaltung des Systems vorgesehen, dass die plenoptische Kamera einen Bildsensor mit einer Mehrzahl von hintereinander angeordneten Detektorschichten umfasst, insbesondere wobei mindestens eine Detektorschicht zumindest teilweise transparent ist. Durch die hintereinander angeordneten Detektorschichten, die vorzugsweise aus Graphen bestehen, ist ebenfalls ein Rückschluss auf die Richtung der einfallenden Strahlung möglich.

Die Präzision, mit der die Eigenschaften mindestens eines Rades eines Schienenfahrzeugs erfasst wird, wird gemäß einer weiteren Ausgestaltung des Systems dadurch gesteigert, dass mindestens eine zweite Erfassungseinrichtung, insbesondere eine zweite plenoptische Kamera, vorgesehen ist, und dass die zweite Erfassungseinrichtung zumindest teilweise einen zweiten Bereich auf dem Rad erfasst, bevorzugt, dass mindestens eine dritte Erfassungseinrichtung, insbesondere eine dritte plenoptische Kamera, vorgesehen ist, und dass die dritte Erfassungseinrichtung zumindest teilweise einen dritten Bereich auf dem Rad erfasst.

Die zweite und/oder die dritte Erfassungseinrichtung erfassen zumindest teilweise einen zweiten bzw. dritten Bereich, auf dem auf der Schiene angeordneten, also auf der Schiene stehenden oder passierenden Rad. Durch die Erfassung von weiteren Bereichen wird die Genauigkeit der ermittelten geometrischen Daten des Rades gesteigert, da mehr Bilddaten, nämlich aus dem ersten Bereich und/oder dem zweiten Bereich und/oder dem dritten Bereich vorliegen.

Vorzugsweise umfasst der erste Bereich und/oder der zweite Bereich jeweils einen Teil der Lauffläche sowie einen Teil des Radkranzes. Vorzugsweise ist der dritte Bereich auf den Radrücken gerichtet und umfasst zusätzlich einen Teil des Radkranzes. Bevorzugt umfasst das System drei Erfassungseinrichtungen, nämlich eine erste Erfassungseinrichtung, die auf den ersten Bereich ausgerichtet ist, eine zweite Erfassungseinrichtung, die auf den zweiten Bereich ausgerichtet ist, und eine dritte Erfassungseinrichtung, die auf den dritten Bereich ausgerichtet ist.

Die Erfassungsgenauigkeit wird zudem mit einer weiteren Ausgestaltung des Systems dadurch gesteigert, dass mindestens eine erste Strahlungsquelle zur Emission von Strahlung eines bestimmten Wellenlängenbereichs umfasst ist, und dass mindestens eine Erfassungseinrichtung, also die erste Erfassungseinrichtung und/oder die zweite Erfassungseinrichtung und/oder die dritte Erfassungseinrichtung, zur Erfassung der Strahlung im Wellenlängenbereich der ersten Strahlungsquelle ausgebildet ist.

Die ersten Strahlungsquelle beleuchtet beispielsweise zumindest teilweise den ersten Bereich und/oder den zweite Bereich und/oder den dritten Bereich auf dem auf der Schiene angeordneten Rad. Vorzugsweise ist die erste Strahlungsquelle auf den ersten Bereich ausgerichtet.

Beispielsweise ist die erste Strahlungsquelle als Infrarotstrahlungsquelle ausgebildet. Wenn die erste Strahlungsquelle als Infrarotstrahlungsquelle ausgebildet ist, ist die Erfassungseinrichtung bzw. sind die Erfassungseinrichtungen auch so ausgebildet, dass Strahlung im Wellenlängenbereich der Infrarotstrahlung der Strahlungsquelle erfassbar ist. Vorzugsweise ist eine zweite Strahlungsquelle für den zweiten Bereich und eine dritte Strahlungsquelle für den dritten Bereich vorgesehen. Eine Strahlungsquelle bestrahlt den jeweiligen Bereich zumindest teilweise, vorzugsweise vollständig. Insbesondere ist die erste Strahlungsquelle und/oder die zweite Strahlungsquelle und/oder die dritte Strahlungsquelle als Laser, insbesondere als Infrarotlaser, ausgebildet. Die Strahlungsquellen emittieren folglich Strahlung in einem Spektralbereich zwischen 1 mm und 780 nm bzw. einem Frequenzbereich von 300 GHz bis 400 THz. Die Erfassungseinrichtungen sind dann entsprechend so ausgebildet, dass sie die vom Rad reflektierte Infrarotstrahlung erfassen können und in Bilddatensätze umwandeln können.

Die Funktionalität des Systems wird gemäß einer weiteren Ausgestaltung dadurch gesteigert, dass mindestens eine Bremserfassungseinrichtung vorhanden ist und dass die Bremserfassungseinrichtung als plenoptische Kamera ausgebildet ist. Vorzugsweise umfasst das System zwei, insbesondere drei Bremserfassungseinrichtungen, also eine der Anzahl an einem Radsatz vorgesehenen Anzahl an Bremsscheiben. Die Bremserfassungseinrichtung, insbesondere die plenoptische Kamera, ist an der Schiene angeordnet und so ausgerichtet, dass mindestens eine Bremsscheibe eines auf der Schiene passierenden Rades bzw. Radsatzes zumindest an einem Auslösezeitpunkt mit der Bremserfassungseinrichtungen erfassbar ist. Auf Basis der erfassten Bilddaten der geometrischen Eigenschaften können die Maße der Bremsscheibe bestimmt und auf den Verschleiß geschlossen werden.

Die Steuerung des Systems wird gemäß einer weiteren Ausgestaltung verbessert, indem vorgesehen ist, dass mindestens eine Auslöseeinrichtung vorhanden ist, dass die Auslöseeinrichtung auf das an der Schiene angeordnete Rad ausgerichtet ist und dass mit der Auslöseeinrichtung eine Erfassung mit mindestens einer Erfassungseinheit auslösbar ist. Die Erfassungseinrichtung detektiert vorzugsweise das Vorhandensein des mindestens einen auf der Schiene angeordneten Rades und löst zu einem vorbestimmten Auslösezeitpunkt die Erfassung mit mindestens einer Erfassungseinheit aus. Vorzugsweise löst die Auslöseeinrichtung zu einem Auslösezeitpunkt die Erfassung mit der ersten Erfassungseinheit und/oder der zweiten Erfassungseinheit und/oder der dritten Erfassungseinheit aus. Insbesondere löst die Auslöseeinrichtung zumindest zum Auslösezeitpunkt auch eine Emission von Strahlung mit der ersten Strahlungsquelle und/oder der zweiten Strahlungsquelle und/oder der dritten Strahlungsquelle aus, so dass der erste Bereich und/oder der zweite Bereich und/oder der dritte Bereich zum Auslösezeitpunkt beleuchtet sind.

Beispielsweise weist das System eine zweite Auslöseeinrichtung auf, wobei die zweite Auslöseeinrichtung ebenfalls auf das auf der Schiene angeordnete Rad ausgerichtet ist, und dass mittels der ersten Auslöseeinrichtung und der zweiten Auslöseeinrichtung eine Erfassung mit mindestens einer Erfassungseinheit auslösbar ist. Vorzugsweise wird mit beiden Auslöseeinrichtungen die Erfassung mit mindestens der ersten Erfassungseinheit und/oder der zweiten Erfassungseinheit und/oder der dritten Erfassungseinheit zu einem Auslösezeitpunkt ausgelöst. Insbesondere lösen die Auslöseeinrichtungen zumindest zum Auslösezeitpunkt auch eine Emission von Strahlung mit der ersten Strahlungsquelle und/oder der zweiten Strahlungsquelle und/oder der dritten Strahlungsquelle aus, so dass der erste Bereich und/oder der zweite Bereich und/oder der dritte Bereich zum Auslösezeitpunkt beleuchtet sind.

Vorteilhaft ist vorgesehen, dass die erste Auslöseeinrichtung und die zweite Auslöseeinrichtung in Schienenlängsrichtung zueinander beabstandet sind. Vorzugsweise erfasst eine Auslöseeinrichtung einen bewegungsrichtungszugewandten Teil des Umfangs des Rades und die zweite Auslöseeinrichtung den bewegungsrichtungsabgewandten Teil des Umfangs des Rades.

Das System lässt sich gemäß einer letzten Ausgestaltung dadurch verbessern, dass ein zweiter Systemteil umfasst ist, dass der zweite Systemteil identisch zu dem ersten Systemteil ausgebildet ist und dass der zweite Systemteil an der zweiten Schiene des Gleises angeordnet ist. Der zweite Systemteil ist vorzugsweise derart ausgebildet und eingerichtet, dass ein zweites Rad eines Schienenfahrzeuges, vorzugsweise das dem Radsatz des ersten Rades zugeordnete zweite Rad, erfassbar ist.

Mit einem ersten Systemteil und einem zweiten Systemteil lassen sich folglich gleichzeitig das erste Rad und das zweite Rad eines Radsatzes erfassen und die Eigenschaften bestimmen. Vorzugweise werden gleichzeitig zu einem Auslösezeitpunkt mit dem ersten Systemteil und dem zweiten Systemteil Eigenschaften des ersten Rades und des zweiten Rades erfasst. Zudem können über die Software gesteuerte Auswertungen Aussagen in Bezug auf die Positionierung des ersten Rades und des zweiten Rades relativ zueinander getroffen werden, da die Montagepositionen und Ausrichtung der Erfassungseinrichtungen des ersten Systemteils und des zweiten Systemteils, auch relativ zueinander, vollständig bekannt sind. Dazu ist vorgesehen, dass die Ausrichtung und Montagepositionen aller Erfassungseinrichtungen und/oder Strahlungsquellen, insbesondere auch relativ zueinander, bei der Auswertung von der Auswerteeinheit berücksichtigt werden, um Eigenschaften des Radsatzes zu ermitteln.

Die eingangs genannte Aufgabe ist ferner gelöst mit einem Verfahren zur Ermittlung von Eigenschaften eines Rades, eines Schienenfahrzeuges, das durch die folgenden Schritte gekennzeichnet ist:
- Erfassen eines ersten Bereichs eines auf einer Schiene angeordneten Rades mit mindestens einer als plenoptische Kamera ausgebildeten ersten Erfassungseinrichtung und Erzeugen mindestens eines ersten Bilddatensatzes.

Das auf einer Schiene angeordnete, also auf der Schiene stehende oder passierende Rad, wird folglich mit der ersten Erfassungseinrichtung erfasst und ein Bilddatensatz generiert. Auf Basis dieses Bilddatensatzes werden beliebige geometrische Eigenschaften, also Maße des Rades bestimmt und so die Wartungsintervalle oder eine erforderliche Wartung des Rades festgelegt.

Eine erste Ausgestaltung des Verfahrens sieht vor, dass ein zusätzlicher Verfahrensschritt umfasst ist, nämlich das Berechnen eines Modelldatensatzes unter Verwendung des ersten Bilddatensatzes, wobei der Modelldatensatz als dreidimensionales, zumindest teilweises Modell des ersten Rades darstellbar ist. Der Modelldatensatz wird aus dem Bilddatensatz berechnet, indem die Daten in ein dreidimensionales zumindest teilweises Modell des Rades umgerechnet werden. Die umgerechneten Daten können dann zur Ermittlung der geometrischen Eigenschaften des Rades herangezogen werden.

Das Verfahren wird ferner vorteilhaft dadurch ausgebildet, dass zumindest zum Auslösezeitpunkt, also zu dem Zeitpunkt, zu dem eine Erfassung mit mindestens der ersten Erfassungseinheit erfolgt, eine Projektion von Strahlung mit mindestens einer ersten Strahlungsquelle in mindestens den ersten Bereich erfolgt. Das hat den Vorteil, dass zum Zeitpunkt der Erfassung zumindest der erste Bereich mit der Strahlungsquelle ausgeleuchtet wird, wodurch die Qualität der mit der Erfassungseinheit erfassten Bilddaten gesteigert wird.

Insbesondere ist dies vorteilhaft, wenn die Projektion im nichtsichtbaren, also im nicht mit dem menschlichen Auge sichtbaren, Infrarotbereich erfolgt. Vorzugsweise erfolgt die Erfassung gleichzeitig mit einer ersten Erfassungseinheit, einer zweiten Erfassungseinheit und einer dritten Erfassungseinheit, wobei zum Auslösezeitpunkt auch eine Projektion mit einer ersten Strahlungsquelle, einer zweiten Strahlungsquelle im zweiten Bereich und einer dritten Strahlungsquelle im dritten Bereich erfolgt.

Das Verfahren ist vorteilhaft dadurch weitergebildet, dass aus dem Modelldatensatz ein Profildatensatz berechnet wird und dass der Profildatensatz mit mindestens einem in einer Datenbank gespeicherten weiteren Profildatensatz verglichen wird und dass durch diesen Vergleich Veränderungen in den geometrischen Eigenschaften des Rades ermittelt werden. Der Profildatensatz repräsentiert alle Bilddaten - sofern vorhanden - der ersten Erfassungseinrichtung und/oder der zweiten Erfassungseinrichtung und/oder der dritten Erfassungseinrichtung.

Ferner wird erfindungsgemäß die Verwendung einer plenoptische Kamera zur Erfassung von Eigenschaften eines Rades eines Schienenfahrzeuges an einer Schiene beansprucht.

Im Einzelnen gibt es nun eine Vielzahl von Möglichkeiten, das System und das Verfahren auszugestalten und weiterzubilden. Dazu wird verwiesen auf die den Patentansprüchen 1 und 9 nachfolgenden Patentansprüche sowie auf die nachfolgende Beschreibung von bevorzugten Ausführungsbeispielen in Verbindung mit der Zeichnung. In der Zeichnung zeigen:
- Fig. 1: ein Ausführungsbeispiel eines Systems in perspektivischer Ansicht,
- Fig. 2: ein Ausführungsbeispiel eines Systems in geschnittener Ansicht,
- Fig. 3: ein Ausführungsbeispiel eines Systems in Draufsicht,
- Fig. 4: ein Ausführungsbeispiel eines Systems in Seitenansicht,
- Fig. 5: ein Ausführungsbeispiel eines Systems in Seitenansicht,
- Fig. 6: ein Ausführungsbeispiel eines Systems in Frontansicht,
- Fig. 7: ein Ausführungsbeispiel eines Systems in Draufsicht,
- Fig. 8: ein Ausführungsbeispiel eines schematischen Ablaufs eines Verfahrens,
- Fig. 9: eine beispielhafte Übersicht eine Übersicht der geometrischen Eigenschaften des Rades,
- Fig. 10: eine beispielhafte dreidimensionale Darstellung eines Modelldatensatzes, und
- Fig. 11: eine beispielhafte zweidimensionale Darstellung eines Profildatensatzes

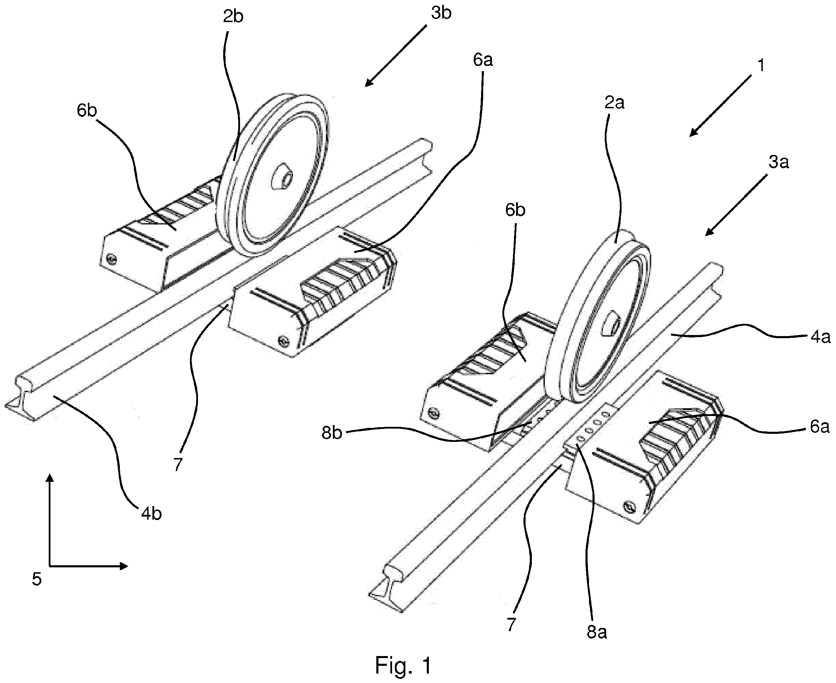

Fig. 1 zeigt ein System 1 zur Erfassung von Eigenschaften mindestens eines Rades 2a, 2b eines Schienenfahrzeugs - nicht dargestellt -. Das System 1 umfasst einen ersten Systemteil 3a und einen zweiten Systemteil 3b, die vollständig identisch ausgebildet sind. Der erste Systemteil 3a dient zur Erfassung von Eigenschaften eines ersten Rades 2a und der zweite Systemteil 3b dient der Erfassung der Eigenschaften eines zweiten Rades 2b eines Radsatzes. Der ersten Systemteil 3a und der zweite Systemteil 3b sind identisch, weshalb nachfolgend lediglich auf den ersten Systemteil 3a Bezug genommen wird.

Fig. 1 zeigt, dass der erste Systemteil 3a ein erstes Außengehäuse 6a und ein zweites Außengehäuse 6b umfasst. Das System 1 ist an einem Gleis 5 mit einer ersten Schiene 4a und einer zweiten Schiene 4b angeordnet. Das erste Außengehäuse 6a und das zweite Außengehäuse 6b sind auf einer Montageplatte 7 angeordnet, die die Schiene 4a unterläuft und mittels Spannplatten 8a, 8b am Schienenfuß der Schiene 4a befestigt ist. Das erste Außengehäuse 6a und das zweite Außengehäuse 6b sind so gestaltet, dass die Oberkante auf einer Höhe mit der Schienenoberkante oder niedriger liegt.

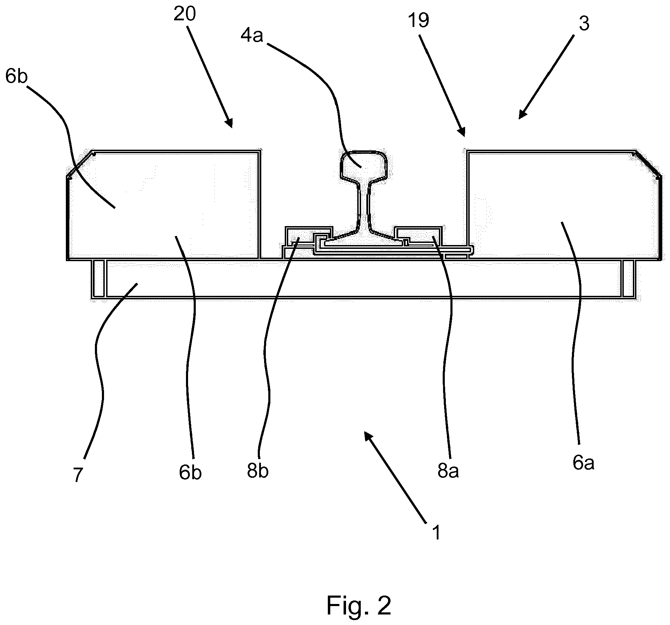

Fig. 2 zeigt den ersten Systemteil 3a in einer Seitenansicht mit geschnittener erster Schiene 4a. Die Montageplatte 7 unterläuft die Schiene 4a und ist mit Spannplatten 8a, 8b am Schienenfuß der Schiene 4a befestigt. Die Außengehäuse 6a und 6b des Systems 1 sind an der Montageplatte 7 befestigt und befinden sich mit ihrer Oberkante auf einer Höhe mit der Oberkante der Schiene 4a.

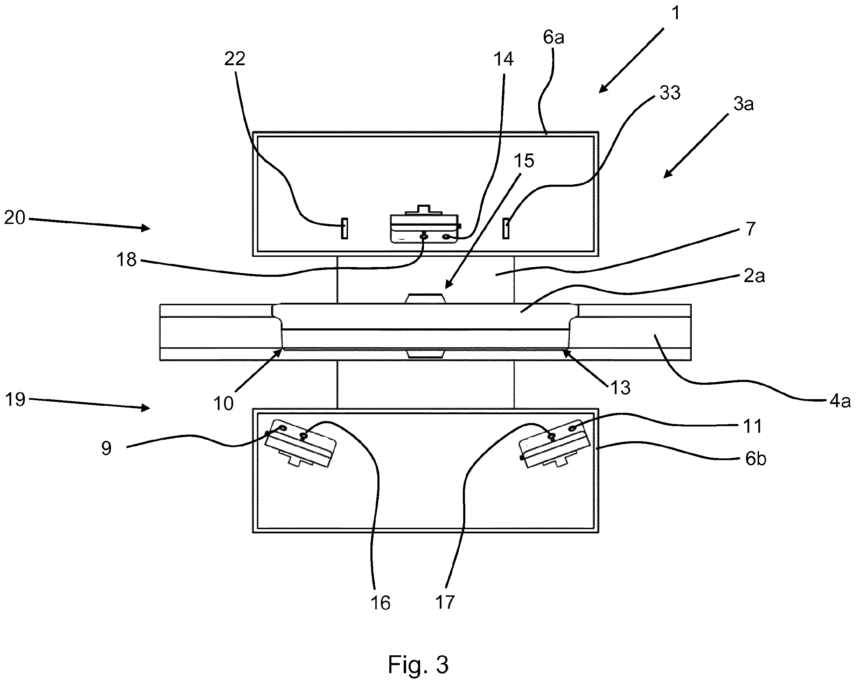

Fig. 3 zeigt ein Ausführungsbeispiel eines Systems 1, insbesondere eines ersten Systemteils 3a, in Draufsicht. Der erste Systemteil 3a umfasst mindestens eine erste Erfassungseinrichtung 9, die auf einen ersten Bereich 10 des auf der Schiene 4a angeordneten Rades 2a ausgerichtet ist und diesen insbesondere an mindestens einem Auslösezeitpunkt erfasst. Ferner weist der erste Systemteil 3a eine zweite Erfassungseinrichtung 11 für einen zweiten Bereich 13 sowie eine dritte Erfassungseinrichtung 14 für einen dritten Bereich 15 auf. Neben den Erfassungseinrichtungen 9, 11, 14 weist der erste Systemteil 3a eine erste Strahlungsquelle 16 zur Emission von Strahlung in den ersten Bereich 10, eine zweite Strahlungsquelle 17 zur Emission von Strahlung in den zweiten Bereich 13 und eine dritte Strahlungsquelle 18 zur Emission von Strahlung in den dritten Bereich 15 auf. Die erste Erfassungseinrichtung 9, die zweite Erfassungseinrichtung 11 und die dritte Erfassungseinrichtung 14 sind jeweils als plenoptische Kamera, also als Lichtfeldkamera, ausgebildet. Mit den plenoptischen Kameras wird neben der Intensität auch die Richtung der einfallenden Strahlung erfasst, wodurch ein zumindest teilweises dreidimensionales Abbild des Rades 2a erzeugbar ist.

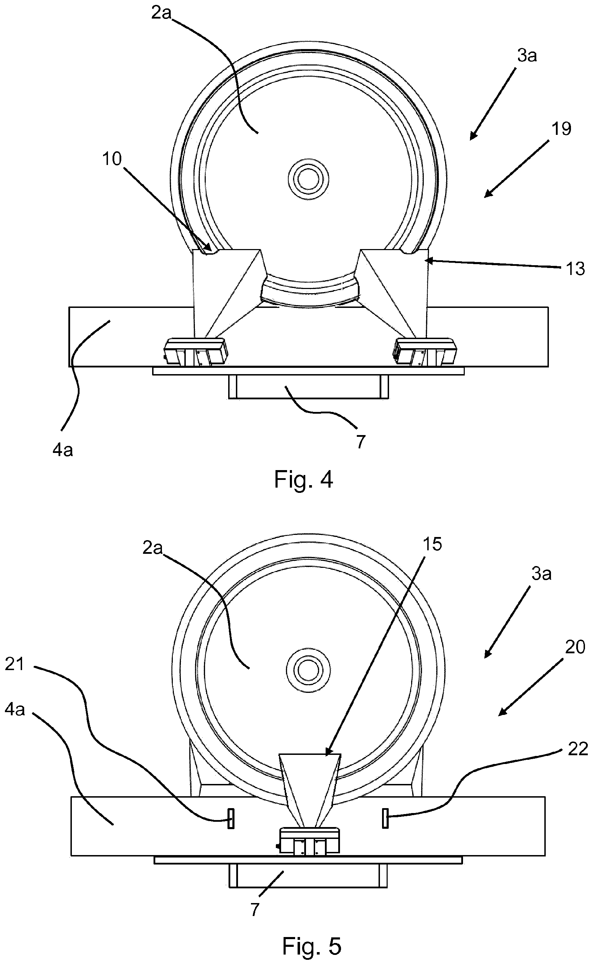

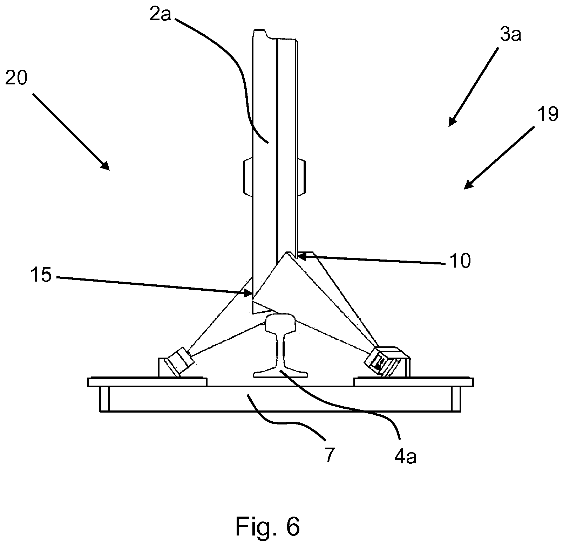

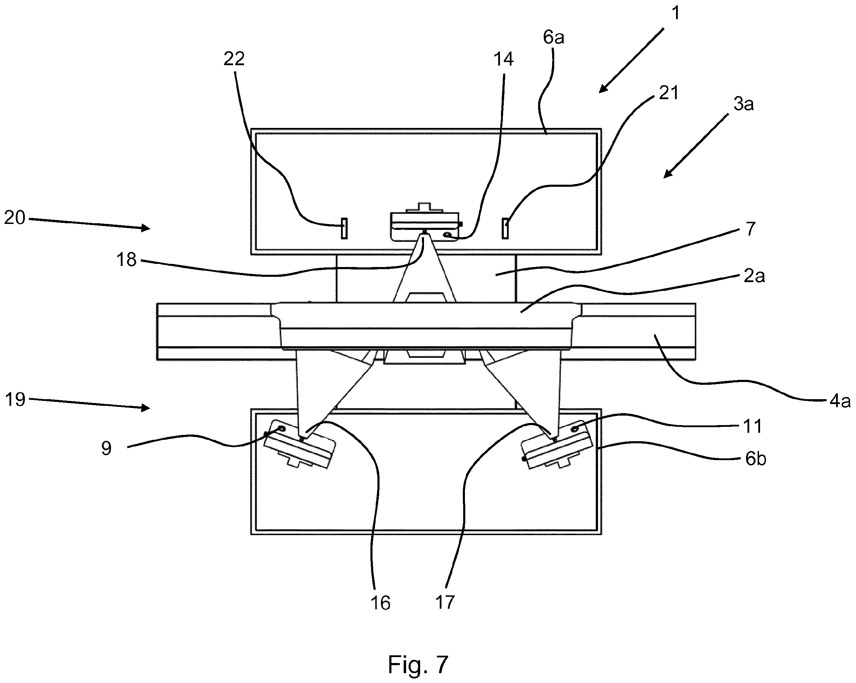

Fig. 4 bis 7 ist das Ausführungsbeispiel gemäß Fig. 3 zu entnehmen, wobei die mit der ersten Strahlungsquelle 16, der zweiten Strahlungsquelle 17 und der dritten Strahlungsquelle 18 projizierte elektromagnetische Strahlung, insbesondere aufgeweitete Laserstrahlen, beispielhaft dargestellt sind.

Fig. 3, Fig. 6 und Fig. 7 ist zu entnehmen, dass die erste Erfassungseinheit 9 und die zweite Erfassungseinheit 11 auf einer ersten Seite 19 der Schiene 4a angeordnet sind, während die dritte Erfassungseinrichtung 14 auf einer zweiten Seite 20 der Schiene 4a angeordnet ist. Auf der zweiten Seite 20 der Schiene 4a ist eine erste Auslöseeinrichtung 21 und eine zweite Auslöseeinrichtung 22 angeordnet, die nach festgelegten Kriterien den Auslösezeitpunkt für die Strahlungsquellen 16, 17, 18 und die Erfassungseinrichtungen 9, 11, 14 festlegen, so dass eine Emission bzw. Projektion und Erfassung in allen drei Bereichen 10, 13, 15 gleichzeitig erfolgt.

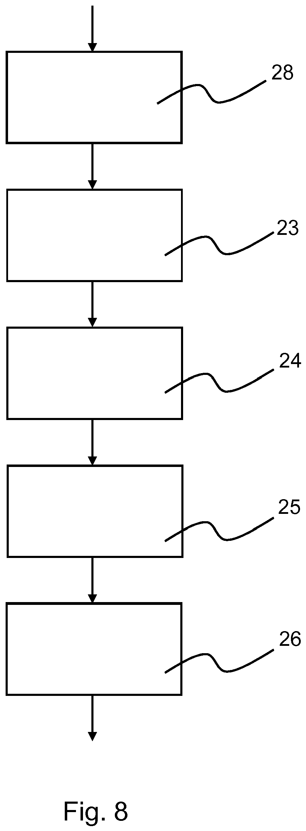

Fig. 8 zeigt einen schematischen Ablauf eines Ausführungsbeispiels eines Verfahrens zur Erfassung von Eigenschaften eines Rades 2a eines Schienenfahrzeuges, umfassend die folgenden Verfahrensschritte:
- Projektion 28 von Strahlung mit mindestens einer ersten Strahlungsquelle in mindestens den ersten Bereich 10,
- Erfassen 23 mindestens eines ersten Bereichs 10 eines auf einer Schiene angeordneten Rades 2a mit mindestens einer als plenoptische Kamera ausgebildeten ersten Erfassungseinrichtung 9 und Erzeugen 24 mindestens eines ersten Bilddatensatzes,
- Berechnen 25 eines Modelldatensatzes unter Verwendung des ersten Bilddatensatzes, wobei der Modelldatensatz als dreidimensionales, zumindest teilweises Modell des ersten Rades 2a darstellbar ist,
- Berechnen 26 eines Profildatensatzes unter Verwendung des Modelldatensatzes, wobei der Profildatensatz durch Transformation des Modelldatensatzes in eine Ebene berechnet wird, und wobei der Profildatensatz als zumindest teilweises, zweidimensionales Profil des ersten Rades 2a darstellbar ist.

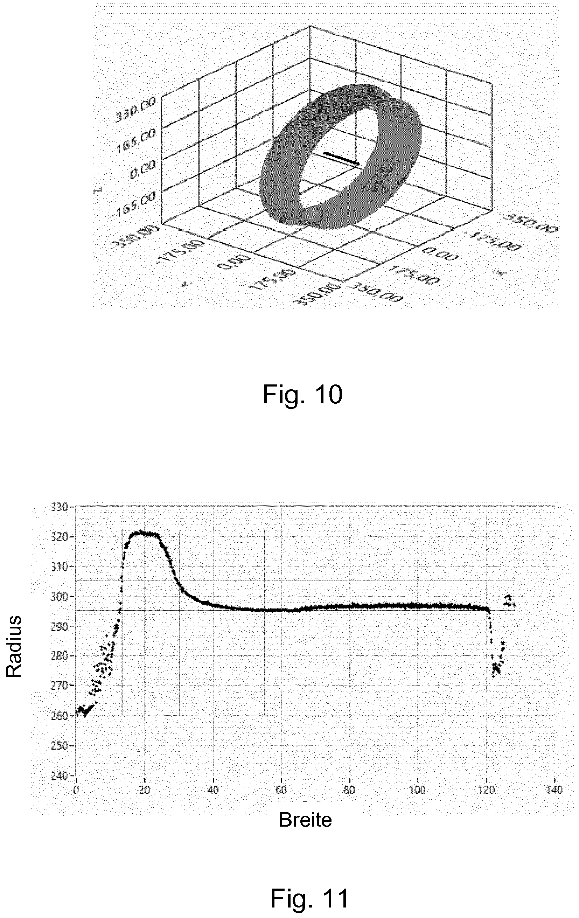

Der Bilddatensatz enthält die geometrischen Eigenschaften des Rades 2a in dem ersten Bereich 10, die ausgewertet werden können. Vorzugsweise erfolgt das gemäß einer Weiterbildung des Verfahrens, nämlich indem ein Berechnen 25 eines Modelldatensatzes (siehe Fig. 10) unter Verwendung des ersten Bilddatensatzes, wobei der Modelldatensatz als dreidimensionales, zumindest teilweises Modell des ersten Rades 2a darstellbar ist.

Vorzugsweise wird anschließend ein Berechnen 26 eines Profildatensatzes aus dem Modelldatensatz. Der Profildatensatz dient als Basis für die Bestimmung der geometrischen Eigenschaften des Rades 2a, beispielsweise die Höhe und Breite des Radkranzes, das Profil der Lauffläche usw. Eine beispielhafte dreidimensionale Darstellung des Rades 2a, nämlich eines Modelldatensatzes ist der Fig. 10 zu entnehmen, eine beispielhafte zweidimensionale Darstellung des Profils des Rades 2a im Bereich der Lauffläche und des Radkranzes, nämlich des Profildatensatzes ist der Fig. 11 zu entnehmen.

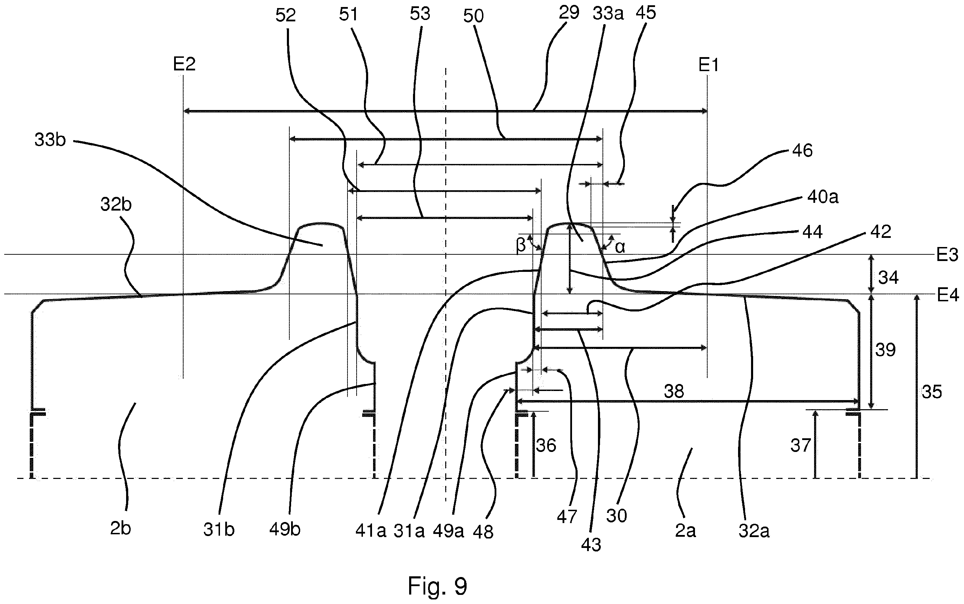

Fig. 9 zeigt eine Übersicht der ermittelbaren geometrischen Eigenschaften des erstes Rades 2a und des zweiten Rades 2b sowie der Eigenschaften des ersten Rades 2a relativ zum zweiten Rad 2b, also des Radsatzes. Das System 1, insbesondere eine Auswerteeinheit, und/oder das Verfahren sind insbesondere so ausgebildet und eingerichtet, dass alle in Fig. 9 dargestellten Maße einzeln oder in Kombination ermittelbar sind und/oder ermittelt werden. Das System 1 und/oder das Verfahren ist folglich zum Ermitteln aller in Fig. 9 dargestellten Maße einzeln oder in Kombination eingerichtet. Insbesondere werden die in Fig. 9 dargestellten Maße aus dem Profildatensatz und/oder der Korrelation des Profildatensatzes des ersten Rades 2a mit dem Profildatensatz des zweiten Rades 2b sowie der Anordnung Erfassungseinheiten 9, 11, 14 ermittelt.

Der Messkreisebenenabstand 29 gibt den Abstand der Messkreisebene E1 des ersten Rades 2a zur Messkreisebene E2 des zweiten Rades 2b an. Die Messkreisebene E1 und die Messkreisebene E2 sind derart angeordnet, dass die Rotationsachse des ersten Rades 2a und die Rotationsachse des zweiten Rades 2b die Messkreisebene E1 und die Messkreisebene E2 im Wesentlichen orthogonal durchtreten. Die Messkreisebene E1 und die Messkreisebene E2 sind ferner derart angeordnet, dass sie mit dem Messkreisebenenabstandx 30 zwischen etwa 60 mm und 65 mm von der Innenflanke 31 a des ersten Rades 2a bzw. der Innenflanke 31 b des zweiten Rades 2b beanstandet ist. Der Schnittkreis der Messkreisebene E1, E2 mit der Lauffläche 32a, 32b definiert den Aufstandsring bzw. Aufstandspunkt des Rades 2a, 2b auf einer Schiene 4a, 4b.

Die Maße am Radkranz 33a, 33b bestimmen sich in einer Schnittebene E3, die orthogonal zur Messkreisebene E1, E2 angeordnet ist, und die im dargestellten Querschnitt mit einem Messkreisebenenabstand-y 34 von etwa 10 mm von dem Schnittpunkt der Messkreisebene E1, E2 mit der Lauffläche 32a, 32b beanstandet ist.

Der Durchmesser 35 des Rades 2a wird ebenfalls in der Messkreisebene E1 bestimmt. Weitere wichtige Maße des Rades sind der Radkörperinnendurchmesser 36 sowie der Radkörperaußendurchmesser 37 und die Radreifenbreite 38.Die Höhe 39 des Radreifens wird in der Messkreisebene E1 zwischen der Unterkante des Radreifens und dem Schnittpunkt mit der Lauffläche 32a bestimmt.

Die Schnittebene E3 bildet die Grundlage für die Bemaßung des Rades 2a im Bereich des Radkranzes 33a. Die Schnittpunkte - im dargestellten Querschnitt - der Schnittebene E3 mit der Innenflanke 40a des Radkranzes 33b und der Außenflanke 41 a des Radkranzes 33a bilden den Ausgangspunkt für folgende Bemaßungen. Eine erste Radkranzbreite 42 wird als Abstand der Schnittpunkte des Radkranzes 33a in der Schnittebene E3 bestimmt. Eine zweite Radkranzbreite 43 wird zwischen dem innenliegenden Schnittpunkt des Radkranzes 33a mit der Schnittebene E3 und der Innenflanke 31 a bestimmt. Eine Radkranzhöhe 44 wird ausgehend von einer Ebene E4, in der der Schnittpunkt der Messkreisebene E1 mit der Lauffläche 32a liegt, bis zur Oberkante des Radkranzes 33 bestimmt. Die Neigung der Innenflanke 40a und der Außenflanke 41 a werden durch die Winkel a und β beschrieben. Alternativ kann die Neigung der Innenflanke 40a durch den Abstand 45 angegeben werden, der sich durch den innenliegenden Schnittpunkt der Schnittebene E3 mit dem Radkranz 33a an seiner Innenflanke 40a und dem Schnittpunkt der Innenflanke 40a in einem Abstand 46 zwischen 0,9 mm und 2 mm von der Oberkante des Randkranzes 33a. Das Flankenmaß 47 gibt den Abstand zwischen dem außenliegenden Schnittpunkt der Schnittebene E3 mit der Außenflanke 41 a des Radkranzes 33a und der Innenflanke 31 a an. Das Flankenmaß 48 den Abstand zwischen der Führungsflanke 49a und der Innenflanke 31 a.

Das System 1 und/oder das Verfahren sind insbesondere so ausgebildet und eingerichtet, das auch die in Fig. 9 dargestellten Maße als geometrische Eigenschaften des ersten Rades 2a relativ zum zweiten Rad 2b ermittelbar sind und/oder ermittelt werden, insbesondere durch Korrelation des Profildatensatzes des ersten Rades 2a mit dem Profildatensatz des zweiten Rades sowie der geometrischen Anordnung der Erfassungseinheiten 9, 11, 14.

Dadurch, dass in einem System 1 die Anordnung der Erfassungseinheiten 9, 11, 14 des ersten Systemteils 3a und des zweiten Systemteils 3b zueinander bekannt sind, sind diese Informationen zur entsprechenden Auswertung durch die Auswerteeinheit verwertbar und werden zur Berechnung herangezogen.

Der Messkreisebenenabstand 29 gibt - wie bereits ausgeführt - den Abstand der Messkreisebene E1 des ersten Rades 2a zur Messkreisebene E2 des zweiten Rades 2b an. Das Spurmaß 50 gibt den Abstand der Schnittpunkte der Innenflanken 40a, 40b mit der Schnittebene E3 an. Das Leitmaß 51 kann beidseitig bestimmt werden und definiert den Abstand des Schnittpunkts der Schnittebene E3 mit der Innenflanke 40a des ersten Rades 2a und der Innenflanke 31 b des zweites Rades 2b. Der Leitkreisabstand 52 definiert den Abstand der Schnittpunkte der Schnittebene E3 mit den Außenflanken 41 a und 41 b. Der Achsrückenabstand 53 definiert den Abstand der Innenflanken 31 a und 31 b des ersten Rades 2a und des zweiten Rades 2b.

Fig. 10 zeigt beispielhaft die dargestellten Daten des Modelldatensatzes, nämlich ein zumindest teilweises Modell des Rades 2. Die umrandet dargestellten Bereiche sind tatsächlich mit Daten hinterlegt, als aus den Bilddatensätzen berechnete Daten. Die Maße auf den Achse x, y, z sind in Millimeter angegeben. Der Modelldatensatz umfasst eine Vielzahl von Messdatenpunkten in einem dreidimensionalen Koordinatensystem, vorzugsweise als Polarkoordinaten. Die Messdatenpunkte bilden sie Oberfläche des Rades 2 in den erfassten Bereichen 10, 13, 15 ab.

Fig. 11 zeigt beispielhaft die dargestellten Daten eines Profildatensatzes, nämlich ein zweidimensionales Profil des Rades 2 im Bereich der Lauffläche 32 (siehe Fig. 9) und des Radkranzes 33. Auf der x-Achse ist die Radbreite und auf der y-Achse der Radius des Rades 2a in Millimeter dargestellt. In Fig. 11 sind alle Messdatenpunkte des Modelldatensatzes aus Fig. 10 in ein zweidimensionales kartesisches Koordinatensystem transformiert worden, so dass sich ein gemitteltes Profil des Rades 2 gemäß Fig. 11 im Bereich der Lauffläche 32, des Radkranzes 33 sowie der Innenflanke 31 ergibt. Ferner beinhalten die Daten den Durchmesser 35 des Rades 2a.

## Patentansprüche

1. System (1) zur Erfassung von Eigenschaften mindestens eines Rades (2) eines Schienenfahrzeugs, wobei das System (1) an mindestens einer ersten Schiene (4a) anordenbar ist, wobei das System (1) mindestens eine erste Erfassungseinrichtung (9) aufweist, wobei die erste Erfassungseinrichtung (9) zur Erfassung mindestens eines ersten Bereichs (10) eines auf der ersten Schiene (4a) passierenden Rades (2) eines Schienenfahrzeuges eingerichtet ist,
**dadurch gekennzeichnet,**
**dass** die erste Erfassungseinrichtung (9) eine plenoptische Kamera ist.

2. System (1) nach Anspruch 1, **dadurch gekennzeichnet,**
**dass** die plenoptische Kamera mindestens eine Hauptlinse und mindestens eine strukturierte Filmschicht oder ein Linsenraster zwischen der Hauptlinse und mindenstens einem Bildsensor aufweist.

3. System (1) nach Anspruch 1, **dadurch gekennzeichnet,**
**dass** die plenoptische Kamera einen Bildsensor mit einer Mehrzahl von hintereinander angeordneten Detektorschichten aufweist, inbesondere wobei mindestens eine Detektorschicht zumindest teilweise transparent ist.

4. System (1) nach einem der Ansprüche 1 bis 3, **dadurch gekennzeichnet, dass** mindestens eine zweite Erfassungeinrichtung (11), insbesondere eine zweite plenoptische Kamera, vorhanden ist, und dass die zweite Erfassungseinrichtung (11) zur zumindest teilweisen Erfassung eines zweiten Bereichs (13) auf dem Rad (2) eingerichtet ist, bevorzugt dass mindestens eine dritte Erfassungseinrichtung (14), insbesondere eine drittte plenoptische Kamera, vorhanden ist, und dass die dritte Erfassungseinrichtung (14) zur zumindestest teilweisen Erfassung eines dritten Bereichs (15) auf dem Rad (2) eingerichtet ist.

5. System (1) nach einem der Ansprüche 1 bis 4, **dadurch gekennzeichnet, dass** mindestens eine erste Strahlungsquelle (16) zur Emmision von Strahlung eines bestimmtes Wellenlängenbereichs umfasst ist, und dass mindestens eine Erfassungseinrichtung (9, 11, 14) zur Erfassung der von Strahlung im Wellenlängenbereich der ersten Strahlungsquelle (16) ausgebildet ist.

6. System (1) nach einem der Ansprüche 1 bis 5, **dadurch gekennzeichnet, dass** das System (1) zur gleichzeitigen Erfassung mit der ersten Erfassungseinrichtung (9) und/oder der zweiten Erfassungseinrichtung (11) und/oder der dritten Erfassungseinrichtung (14) eingerichtet ist.

7. System (1) nach einem der Ansprüche 1 bis 6, **dadurch gekennzeichnet, dass** mindestens eine Bremserfassungseinrichtung vorhanden ist, und dass die Bremserfassungseinrichtung als plenoptische Kamera ausgebildet ist.

8. System (1) nach einem der Ansprüche 1 bis 7, **dadurch gekennzeichnet**, mindestens eine Auslöseeinrichtung (21) vorhanden ist, dass die Auslöseeinrichtung (21) auf das auf der Schiene (4a) angeordnete Rad (2) ausgerichtet sind, und dass mit der Auslöseeinrichtung (21) eine Erfassung mit mindestens einer Erfassungseinrichtung (9, 11, 14) auslösbar ist.

9. Verfahren zur Ermittlung von Eigenschaften eines Rades (2) eines Schienenfahrzeuges, insbesondere mit einem System (1) nach einem der Ansprüche 1 bis 8, **gekennzeichnet durch** die folgenden Schritte:
- Erfassen (23) mindestens eines ersten Bereichs (10) eines auf einer Schiene (4a) angeordneten Rades (2) mit mindestens einer als plenoptische Kamera ausgebildeten ersten Erfassungseinrichtung (9) und Erzeugen (24) mindestens eines ersten Bilddatensatzes.

10. Verfahren nach Anspruch 9, **dadurch gekennzeichnet,**
**dass** zusätzlich folgender Verfahrensschritt ausgeführt wird:
- Berechnen (25) eines Modelldatensatzes unter Verwendung des ersten Bilddatensatzes, wobei der Modelldatensatz als dreidimensionales, zumindest teilweises Modell des ersten Rades (2a) darstellbar ist.

11. Verfahren nach Anspruch 10, **dadurch gekennzeichnet**, das folgender Verfahrensschritt ausgeführt wird:
- Berechnen (26) eines Profildatensatzes unter Verwendung des Modelldatensatzes, wobei der Profildatensatz durch Transformation des Modelldatensatzes in eine Ebene berechnet wird, und wobei der Profildatensatz als zumindest teilweises, zweidimensionales Profil des ersten Rades (2a) darstellbar ist.

12. Verfahren nach Anspruch 11, **dadurch gekennzeichnet**, das folgender Verfahrensschritt ausgeführt wird:
- Vergleichen (27) des Profildatensatzes mit mindestens einem in einer Datenbank gespeicherten weiteren Profildatensatz, wobei durch diesen Vergleich Veränderungen in den geometrischen Eigenschaften des Rades (2a) ermittelt werden.

13. Verfahren nach einem der Ansprüche 9 bis 12, **dadurch gekennzeichnet, dass** zusätzlich folgender Verfahrensschritt ausgeführt wird:
- Projektion (28) von Strahlung mit mindestens einer ersten Strahlungsquelle (16) in mindestens den ersten Bereich (10).

14. Verwenden einer plenoptischen Kamera zur Erfassung von Eigenschaften eines auf einer Schiene stehenden oder bewegenden Rades (2) eines Schienenfahrzeuges.
